# EUROPÄISCHE PATENTANMELDUNG

(11) **EP 3 647 037 A1**
(43) Veröffentlichungstag der Anmeldung: **06.05.2020**
(21) Anmeldenummer: 18203411.6
(22) Anmeldetag: 30.10.2018
(51) Int. Cl.: B29C 70/50, B29C 70/54, B29C 65/08, B29C 65/00, B29B 11/16, B29C 70/20, B29C 70/32, B29C 53/58

(54) **VORRICHTUNG UND VERFAHREN ZUR HERSTELLUNG VON X TAPE/X HALBZEUGBAHN MITTELS SPIRALSCHWEISS- UND SCHNEIDEVERFAHREN**

(71) Anmelder: Profol Kunststoffe GmbH, 83128 Halfing (DE)
(72) Erfinder: Bayer, Helmut, 83361 Kienberg (DE)
(74) Vertreter: SSM Sandmair

(57) **Zusammenfassung**

Ein Verfahren und eine Vorrichtung zur Herstellung einer mit unidirektional ausgerichteten Verstärkungsfasern verstärkten Halbzeugbahn (H1, H2), die die Verstärkungsfasern eingebettet in eine Matrix enthält, wobei die Matrix eines oder mehrere thermoplastische Polymere enthält und wobei die unidirektional ausgerichteten Verstärkungsfasern einen vorbestimmten Winkel X mit der Laufrichtung einschließen, dessen Betrag X im Bereich von größer 0° bis 90° liegt, wobei das Verfahren die folgenden Schritte umfaßt:
a) Zuführen einer mit unidirektional in Ausgangshalbzeugbahn-Laufrichtung ausgerichteten Verstärkungsfasern verstärkten Ausgangshalbzeugbahn (C), die die Verstärkungsfasern eingebettet in eine Matrix enthält, wobei die Matrix eines oder mehrere thermoplastische Polymere enthält;
b) helixförmiges Aufwickeln der Ausgangshalbzeugbahn auf einer Walze (D), wobei die Randkanten der Ausgangshalbzeugbahn überlappen oder auf Stoß positioniert werden und die Laufrichtung der Ausgangshalbzeugbahn mit der Drehachse der Walze einen Winkel α einschließt, dessen Betrag größer als 0° und kleiner als 90° ist;
c) Verbinden der Ausgangshalbzeugbahn entlang der überlappenden oder auf Stoß positionierten Randkanten unter Bildung einer Halbzeugröhre (F);
d) Schneiden der Halbzeugröhre entlang einer oder mehrerer Schneidkanten, wobei die Schneidkante(n) mit der Drehachse der Walze einen Winkel β einschließt/einschließen, dessen Betrag größer als 0° und kleiner als 90° ist, wobei gilt: α + β + X = 180°;
e) Abnehmen der entstandenen mit unidirektional ausgerichteten Verstärkungsfasern verstärkten Halbzeugbahn(en), deren Randkanten den Schneidkanten aus Verfahrensschritt d) entsprechen und deren unidirektional ausgerichtete Verstärkungsfasern den Winkel X mit der Laufrichtung einschließen.

## Beschreibung

Die Erfindung betrifft ein Verfahren zur Herstellung einer mit unidirektional ausgerichteten Verstärkungsfasern verstärkten Halbzeugbahn, wobei die Endlosfasern eine definierte und von der Laufrichtung abweichende Ausrichtung aufweisen (sogenanntes X°-Tape/X-Halbzeugbahn). Weiterhin betrifft die Erfindung eine Vorrichtung zur Durchführung des erfindungsgemäßen Verfahrens.

Als Ersatz für Metallbleche werden insbesondere im Automobil- und Luftfahrzeugbau bereits seit einiger Zeit Organobleche eingesetzt, die eine hohe mechanische Stabilität mit geringem Gewicht verbinden können. Organobleche werden beispielsweise unter dem Namen Tepex® von Bond-Laminates GmbH, Brilon, Deutschland und als Ultracom® von der BASF SE, Ludwigshafen, Deutschland angeboten. Organobleche sind Faser-Matrix-Halbzeuge, die in der Regel aus einem in eine thermoplastische Matrix eingebetteten Fasergewebe oder Fasergelege bestehen. Da das Zug- und Druckverhalten und andere mechanische und thermische Eigenschaften von Organoblechen im Gegensatz zu Metallblechen nicht isotrop ist und von der Ausrichtung der Fasern abhängt, werden teilweise ungeregelt verteilte Kurzfasern oder Fasergewebe in eine thermoplastische Matrix eingebettet. Besondere mechanische Stabilität tragen jedoch Endlosfasern bei.

Für die Herstellung von Halbzeugbahnen als Bestandteile von Organoblechen sind Verfahren vorgeschlagen worden, bei denen auf eine Grundbahn Fasern und Matrixmaterial abgelegt werden, die dann in einem nachfolgenden Schritt verbunden werden (bspw. EP 3 077 308 A1).

Alternativ sind Bauteile aus Organoblechen bekannt, die durch Abschneiden von Segmenten sogenannter 0°-Tapes, d.h. von Segmenten von bandförmigen Bahnen, die eine Faserverstärkung mit parallel in Laufrichtung angeordneter paralleler in einer thermoplastischen Kunststoffmatrix eingebetteter Endlosfasern aufweisen, und Ablegen dieser Segmente übereinander in mehreren Lagen in eine bestimmte Form eines Presswerkzeugs bzw. Laminier-Werkzeugs mit anschließender Laminierung unter Druck und Hitze hergestellt werden. Ein Organoblech ist somit ein Mehrschichtverbundwerkstoff, dessen Schichten den Segmenten der faserverstärkten und gegebenenfalls auch zusätzlich nicht faserverstärkten Halbzeugbahnen/Bändern entsprechen. Dadurch, daß hier die verschiedenen Lagen der Segmente eine unterschiedliche Ausrichtung der Faserverstärkung aufweisen können, lassen sich, obwohl verhältnismäßig aufwendig in der Produktion, Organobleche mit vorbestimmten Zugkräften und thermischen sowie mechanischen Eigenschaften in vorbestimmten gewünschten Richtungen des Bauteils erzielen. "Laufrichtung" im Verständnis der vorliegenden Offenbarung ist gleichbedeutend mit der Bahnhauptrichtung (oder Hauptbahnrichtung) eines Bandes. Ein 0°-Tape (0°-UD-Tape, 0°-UD-Band) weist somit Fasern auf, die im wesentlichen parallel zur Laufrichtung des Bandes verlaufen.

Besonders vielseitig, variabel und besonders ökonomisch lassen sich Organobleche dagegen durch Laminieren mehrerer vorfabrizierter Halbzeugbahnen/Bänder herstellen, wobei die zu laminierenden Halbzeugbahnen/Bänder je eine thermoplastische Matrix aus vorzugsweise demselben oder kompatiblen thermoplastischen Kunststoffen und innerhalb einer Halbzeugbahn/eines Bandes im wesentlichen parallel ausgerichtete Verstärkungsfasern enthalten. Um die innerhalb einer Halbzeugbahn/eines Bandes, d.h. einer Lage anisotropen Eigenschaften in mehreren Richtungen der Ebene verfügbar zu machen, können Lagen aus Bändern mit unterschiedlichen Ausrichtungen der Fasern laminiert werden. Ein solches Organoblech besteht dann beispielsweise aus bis zu zehn Lagen oder mehr, die aus Halbzeugbahnen/Bändern mit mindestens zwei unterschiedlichen Faserausrichtungen geschnitten wurden.

Ein Organoblech im weiteren Sinne kann auch eine oder mehrere nicht-polymere Schichten, beispielsweise metallische wie Aluminium- Kupfer- und/oder Stahlschichten umfassen.

Die (mechanischen) Eigenschaften einer Lage und auch eines Verbundes verschiedener Lagen lassen sich mit guter Genauigkeit berechnen und vorhersagen, wenn die Faserdichte innerhalb einer Halbzeugbahn/eines Bandes keinen großen Schwankungen unterliegt. Zugbelastung, Steifigkeit, Festigkeit und Wärmeausdehnung hängen insbesondere von der Faserdichte ab. Daher sollten die Halbzeugbahnen/Bänder für eine bessere Qualitätstoleranz und zur besseren Vorhersagbarkeit und Berechenbarkeit dieser Parameter keine regellos oder periodisch wiederkehrenden "Fehlstellen" deutlich geringerer Faserdichte aufweisen.

Das einfachste Beispiel einlagiger mit unidirektionalen Endlosfasern verstärkter Halbzeugbahnen sind die obengenannten 0°-UD-Tapes (UD = unidirectional), in denen die parallel angeordneten Endlosfasern, eingebettet in eine thermoplastische Matrix im wesentlichen genau parallel zur Laufrichtung ausgerichtet sind. Solche 0°-UD-Tapes (0°-Tapes, 0-Tapes) und deren Herstellung werden unter anderem in WO 2012/123302 A1 beschrieben. Neben 0°-Tapes sind auch sogenannte X°-UD-Tapes (oder X°-Tape, bzw. X-Tape) bekannt, d.h. Bänder, die ebenfalls parallel zueinander angeordnete Endlosfasern, eingebettet in eine thermoplastische Matrix beinhalten, wobei jedoch die Faserrichtung einen von 0° unterschiedlichen Winkel zur Laufrichtung bildet. Üblicherweise wird der Winkel als Winkelbetrag angegeben, d.h. in einem Bereich von größer als 0° bis 90°. Ein 90°-UD-Tape (90°-Tape, 90-Tape) beinhaltet also genau quer zur Laufrichtung verlaufende zueinander parallele Fasern.

Es ist bekannt, daß unter Verwendung von 0°-UD-Tapes X-Tapes hergestellt werden können. So beschreiben beispielsweise EP 2 377 673 A2, EP 0 740 996 A1, US 5,766,725 oder auch DE 10 1012 111 761 A1 jeweils Verfahren, in denen Abschnitte eines 0°-UD-Tapes so auf einer Bahngrundlage, d.h. auf einer bereits bestehenden thermoplastischen Bahn nebeneinander abgelegt und laminiert werden, daß die Fasern der Abschnitte weiterhin parallel, jedoch in einem Winkel größer als 0° bis hin zu 90° zur Laufrichtung der Bahngrundlage ausgerichtet sind. In den auf diese Weise hergestellten mindestens zweilagigen, niemals einlagigen Bändern wird für die mechanische Festigkeit des Bandes und zur Verbindung der 0°-UD-Tape-Abschnitte untereinander eine stabilisierende Bahngrundlage benötigt. Eine derartig hergestellte Bahn weist eine größere Dicke, geringere Flexibilität, schlechte Aufwickelbarkeit und eine geringere und vor allem nicht über die gesamte Dicke gleichmäßige Faserdichte auf.

Auch die Herstellung einlagiger X-Tapes unter Verwendung von Abschnitten aus 0°-UD-Tapes, d.h. ohne die Verwendung einer Bahngrundlage, mit der die Abschnitte verbunden werden, um eine X-Tape-Lage zu bilden, wurde bereits beschrieben. EP 3 243 641 A1 beschreibt ein Verfahren, in dem Abschnitte eines 0°-UD-Tapes auf einem in der neuen Bandrichtung bewegbaren "Tisch" bündig ("abutted"), d.h. auf Stoß aneinander abgelegt werden, gefolgt von Verschweißen, wodurch das X°-Tape gebildet wird. Ausdrücklich wird in EP 3 243 641 A1 betont, daß das Ablegen auf Stoß erfolgt, um eine Deformation des entstehenden X°-Tapes zu vermeiden.

Allen diesen Verfahren ist gemein, daß Segmente einer Ausgangshalbzeugbahn von sich bewegenden Schneidvorrichtungen abgetrennt werden und in einem verhältnismäßig aufwendigen Verfahren einzeln von einer Positioniereinrichtung aufgenommen und an der gewünschten Stelle am Ende des entstehenden X-Bandes abgelegt werden müssen. Die individuellen Schneidvorgänge durch eine sich bewegende Schneidvorrichtung erschweren hierbei das Einhalten höchster Präzision der Schnittkanten. Weitere Schwierigkeiten können bei einer paßgenauen Ablage auf Stoß oder überlappend hinzutreten. Zudem können die konventionellen Verfahren zwangsläufig höchstens semikontinuierlich betrieben werden.

Die vorliegende Erfindung stellt sich daher unter anderem die Aufgabe, ein apparativ einfaches Verfahren zur Herstellung von X-Tapes bereitzustellen, das diese Nachteile vermeidet. Zudem soll das Verfahren möglichst kontinuierlich mit möglichst wenigen beweglichen Teilen betrieben werden können.

Mindestens eine, vorzugsweise mehrere der genannten Aufgaben werden durch ein Verfahren zur Herstellung einer mit unidirektional ausgerichteten Verstärkungsfasern verstärkten Halbzeugbahn gelöst, die die Verstärkungsfasern eingebettet in eine Matrix enthält, wobei die Matrix eines oder mehrere thermoplastische Polymere enthält und wobei die unidirektional ausgerichteten Verstärkungsfasern einen vorbestimmten Winkel X mit der Laufrichtung einschließen, dessen Betrag X im Bereich von größer 0° bis 90° liegt, wobei das Verfahren die folgenden Schritte umfaßt:
a) Zufuhren einer mit unidirektional in Ausgangshalbzeugbahn-Laufrichtung ausgerichteten Verstärkungsfasern verstärkten Ausgangshalbzeugbahn, die die Verstärkungsfasern eingebettet in eine Matrix enthält, wobei die Matrix eines oder mehrere thermoplastische Polymere enthält;
b) Helixförmiges Aufwickeln der Ausgangshalbzeugbahn auf einer Walze, wobei die Randkanten der Ausgangshalbzeugbahn überlappen oder auf Stoß positioniert werden und die Laufrichtung der Ausgangshalbzeugbahn mit der Drehachse der Walze einen Winkel α einschließt, dessen Betrag größer als 0° und kleiner als 90° ist;
c) Verbinden der Ausgangshalbzeugbahn entlang der überlappenden oder auf Stoß positionierten Randkanten unter Bildung einer Halbzeugröhre;
d) Schneiden der Halbzeugröhre entlang einer oder mehrerer Schneidkanten, wobei die Schneidkante(n) mit der Drehachse der Walze einen Winkel β einschließt/einschließen, dessen Betrag größer als 0° und kleiner als 90° ist, wobei gilt: α + β + X = 180°;
e) Abnehmen der entstandenen mit unidirektional ausgerichteten Verstärkungsfasern verstärkten Halbzeugbahn(en), deren Randkanten den Schneidkanten aus Verfahrensschritt d) entsprechen und deren unidirektional ausgerichtete Verstärkungsfasern den Winkel X mit der Laufrichtung einschließen.

Unter Verstärkungsfasern unterscheidet man Kurzfasern mit einer Faserlänge von 0,1 bis 1 mm, Langfasern mit einer Faserlänge von 1 mm bis 50 mm und Endlosfasern mit einer Faserlänge von größer als 50 mm. Erfindungsgemäß bevorzugt ist das Verfahren, wenn die Verstärkungsfasern Endlosfasern sind. Erfindungsgemäß können die Endlosfasern auch im arithmetischen Mittel eine Länge von 50 mm bis 10000 mm oder 200 bis 1000 mm haben. Ebenfalls Endlosfasern im Sinne der Erfindung sind Fasern, deren Länge im wesentlichen der Abmessung der Halbzeugbahn in Laufrichtung entspricht, die sie verstärken sollen. Erfindungsgemäß ist der Anteil an Endlosfasern an den Verstärkungsfasern im allgemeinen größer als 90%, bevorzugt größer als 95%, ganz besonders bevorzugt größer als 98%. Mit Endlosfasern werden die höchsten Steifigkeits- und Festigkeitswerte erzielt.

Eine Halbzeugbahn hergestellt unter Verwendung der vorliegenden Erfindung wird auch als Lage bezeichnet. Eine Endloslage bezeichnet dabei eine Lage (eine Halbzeugbahn, ein 0°-Tape bzw ein X°-Tape), die prinzipiell und praktisch endlos sein kann oder eine Länge von bis zu 3000 m, bevorzugt bis zu 2500 m, beispielsweise bis zu 2000 m aufweist und dabei beispielsweise mindestens länger als 100 m, bevorzugt länger als 1000 m ist, beispielsweise 1800 bis 1900 m.

Eine Halbzeugbahn hergestellt gemäß der vorliegenden Erfindung weist eine Laufrichtung in Richtung ihrer längsten Ausdehnung auf. Üblicherweise kann eine erfindungsgemäße Halbzeugbahn auf eine Rolle bzw. Walze aufgewickelt werden, wobei prinzipiell verschiedene Wickelverfahren und Wickelwinkel zur Verfügung stehen. Man spricht dann von einer Wickellage, bei einer Wickellage aus Endloslage (Endlos-Halbzeugbahn) spricht man dementsprechend von einer Endlos-Wickellage. Der Begriff "Bahn" bzw. "Halbzeugbahn" umfaßt im Sinne der vorliegenden Offenbarung auch eine Bahn "im Entstehen", die ggf nur aus wenigen Segmenten besteht.

Bevorzugt wird durch das erfindungsgemäße Verfahren eine einlagige Halbzeugbahn hergestellt.

Im Verfahrensschritt c) kann die Verbindung durch Verschweißen der Halbzeugbahn prinzipiell durch sämtliche verfügbare Schweißverfahren vorgenommen werden, beispielsweise durch thermisches Schweißen (Erhitzen des thermoplastischen Matrixmaterials über den Erweichungspunkt, Zusammenfließen des Matrixmaterials der zu verschweißenden Teile, Konsolidierung der entstandenen Schweißnaht) mit externer Hitzezufuhr durch IR-Strahler, LASER, Gasflamme oder durch Ultraschallschweißen.

Erfindungsgemäß kann sich an den besprochenen Verfahrensschritt e) beispielsweise noch folgender Verfahrensschritt f) anschließen:
f) Aufwickeln der Halbzeugbahn(en) aus Verfahrensschritt e).

Die Breite der Bahn ist für die Erfindung nicht wesentlich und kann den konkreten praktischen Anforderungen für die Verwendung der Halbzeugbahn angepaßt werden. Allerdings ist die erzielbare Breite durch Schnittwinkel und Umfang der Walze, bzw. Länge der Walze begrenzt. Durch Verwendung von mehr als einer Schneidvorrichtung können zwei oder mehrere X°-Bänder gleichzeitig geschnitten und von der Walze abgenommen werden. Dies führt zu entsprechend geringerer Breite der entstandenen X°-Bänder. Die Breite der hergestellten Halbzeugbahnen kann beispielsweise im Bereich von 30 bis 250 cm liegen, im Bereich von 30 bis 150 cm oder 60 bis 130 cm oder auch im Bereich von 115 bis 128 cm oder speziell bei etwa 124 cm oder präzisen 124,0 cm.

Die Dicke der Halbzeugbahn die Dicke der Ausgangshabzeugbahn beträgt bevorzugt 0,01 mm bis 0,40 mm.

Prinzipiell können die unidirektional ausgerichteten Endlosfasern jeden vorbestimmten Winkel mit der Bahn-Hauptrichtung einschließen, dessen Betrag X im Bereich von größer 0° bis 90° liegt. Bevorzugt sind jedoch Winkel, die deutlich von 0° verschieden sind, beispielsweise Winkel von mindestens 10° oder mindestens 20°. Spezielle X-Tapes gemäß der vorliegenden Erfindung sind dabei 30°-Tapes, 45°-Tapes, 60°-Tapes und 90°-Tapes. Wie bereits beschrieben wird hierbei unter einem beispielsweise 45°-Tape eine Halbzeugbahn verstanden, in der die Fasern um 45° in eine der beiden möglichen Richtungen von der Laufrichtung abweichen.

Als Fasern können erfindungsgemäß alle Arten von Verstärkungsfasern Verwendung finden wie Glasfasern, Polymerfasern wie z.B. Aramidfasern, Polyesterfasern, Polyamidfasern wie Nylonfasern, Polyethylenfasern, Plexiglasfasern, Kohlenstoffasern (Carbonfasern), mineralische Fasern oder anorganische Synthesefasern, Mineralfasern, Basaltfasern, Borfasern, Kieselsäurefasern, Keramikfasern, Stahlfasern, Holzfasern, Flachsfasern, Hanffasern, Jutefasern, Kenaffasern, Ramiefasern, Sisalfasern und Kombinationen davon. Bevorzugt sind die Verstärkungsfasern der Ausgangshalbzeugbahn ausgewählt aus Glasfasern, Polymerfaser, Carbonfasern, mineralische Fasern, anorganische Synthesefasern umfassen. Besonders bevorzugt werden Glasfasern und Carbonfasern, insbesondere Glasfasern.

Glasfaserverstärkte erfindungsgemäß hergestellte Halbzeugbahnen zeichnen sich unter anderem durch ein geringes Gewicht und eine ökonomische Herstellung aus. Die Fasern haben bevorzugt einen Durchmesser im Bereich vom 6 bis 19 µm. Sie können jedoch auch einen niedrigeren oder höheren Durchmesser haben.

Bevorzugt enthält die Matrix mindestens 70 Gew.-% und vorteilhaft beispielsweise höchstens 98 Gew.-% oder 75 bis 95 Gew.-% bzw. 80-90 Gew.-% thermoplastischen Polymer(en). Ganz besonders bevorzugt besteht die Matrix aus einem oder einem Gemisch zweier oder mehrerer thermoplastischer Polymere. Die thermoplastischen Polymere der Kunststoffmatrix besitzen bevorzugt einen niedrigeren Schmelzpunkt als die Verstärkungsfasern. Dabei kann die Matrix prinzipiell jedes thermoplastische Polymer enthalten. Die thermoplastischen Kunststoffe der Kunststoffmatrix besitzen bevorzugt einen niedrigeren Schmelzpunkt als die Verstärkungsfasern. Insbesondere umfaßt die Matrix, einen oder mehrere der folgenden thermoplastischen Kunststoffe: Polyolefin, Polyamid (PA), Polyetheretherketon (PEEK), Polyphenylensulfon, Polyphenylensulfid (PPS), Polysulfon (PSU), Polyetherimid (PEI), Polytetrafluorethylen (PTFE), Thermoplastisches Polyurethan (TPU), Polyethylenterephthalat (PET), Polyarylat und Kombinationen davon. Besonders bevorzugt sind Polypropylen und/oder Polyamid. Besonders bevorzugt enthält die Matrix keine weiteren thermoplastischen Kunststoffe.

Geeignete Polyamide sind beispielsweise: Homopolyamide, Copolyamide sowie Mischungen davon. Bevorzugt werden teilkristalline und/oder amorphe Polyamide eingesetzt wie zB. Polyamid-6, Polyamid-6,6, Polyamide, deren Säurekomponente Terephthalsäure, Isophthalsäure, Korksäure, Sebacinsäure, Azelainsäure, Adipinsäure und/oder Cyclohexandicarbonsäure enthält und/oder deren Diaminkomponente m- und/oder p-Xylylendiamin, Hexamethylendiamin, 2,2,4-Trimethylhexanmethylendiamin, 2,4,4-Trimethylhexamethylendiamin und/oder Isophorondiamin enthält.

Geeignete Polyolefine sind beispielsweise Polyethylen (PE), Polypropylen (PP) oder Ethylen-Propylen-Copolymere.

Bevorzugt enthält die Matrix der hergestellten Halbzeugbahnen wie auch der Ausgangshalbzeugbahnen mindestens 60 Gew.-% aus einem oder mehreren thermo-plastischen Polymeren. Diese können, wie bereits ausgeführt, besonders bevorzugt ausgewählt sein aus der Gruppe bestehend aus Polypropylen und/oder Polyamid.

Dem oder den thermoplastischen Polymer(en) können bis zu 30 Gew.-%, vorzugsweise bis zu 25, 20, 10 oder 5 Gew.-%, bezogen auf die Matrix (Polymer(e) plus Additive) eines oder mehrere übliche Additive beigemischt sein, bevorzugt ausgewählt aus Flammschutzmitteln, Antitropfmitteln, Thermostabilisatoren, Entformungsmitteln, Antioxidantien, UV-Absorbern, IR-Absorbern, Gammastrahlenstabilisatoren, Antistatika, optischen Aufhellern, Lichtstreumitteln, Gleitmitteln, Thermo- und/oder Hydrolyse-Stabilisatoren, Fließverbesserer, Elastomermodifikatoren, Emulgatoren, Nukleierungsmittel, Farbmitteln wie Pigmenten, anorganischen Füllstoffen sowie Gemischen daraus.

In der erfindungsgemäßen Halbzeugbahn können die Abstände von Schweißnaht zu Schweißnaht in Bahn-Hauptrichtung, gemessen von Beginn der Schweißnaht bis zum Beginn der darauffolgenden Schweißnaht bevorzugt 10 bis 150 cm betragen.

Unter dem Fasergewichtsanteil wird dabei der relative Anteil der Fasern am Gesamtgewicht des Matrix (Polymere plus gegebenenfalls Additive) und Verstärkungsfasern enthaltenden Halbzeugs verstanden. Bevorzugt beträgt der Fasergewichtsanteil der Ausgangshalbzeugbahn 50-90 Gew.-%, besonders 60-80 Gew.-%, oder ganz besonders im Bereich von 65 bis 75 Gew.-%, ganz besonders etwa 72 Gew.-%.

Das erfindungsgemäße Verfahren kann semikontinuierlich oder auch vollkontinuierlich durchgeführt werden. Besonders bevorzugt wird das Verfahren kontinuierlich durchgeführt. Dabei kommt die Walze nicht zum Stehen, während kontinuierlich Ausgangshalbzeugbahn zugeführt und schweißfertig auf der Walze positioniert wird. Die Verschweißung kann entweder ohne unmittelbaren Kontakt durch stationäre Verbindungsvorrichtungen erfolgen, die entsprechend entlang den überlappenden oder auf Stoß positionierten Randkanten der Ausgangshalbzeugbahn geführt werden. Oder die Verbindung erfolgt durch kurzzeitig, oder kontinuierlich aufgesetzte Verbindungsvorrichtungen (bspw. Sonotroden, Gasbrenner, Laserkopf), die für die Dauer des Kontakts mit der drehenden Walze mitgeführt oder stehend unter der sich rotierend bewegenden Bahn angesetzt wird. Zusätzlich kann als Verbindungselement ein Polymerstrang analog eines Schweißdrahtes (Schweißfaden) der Fügezone zugeführt werden.

Alternativ kann das erfindungsgemäße Verfahren apparativ einfacher auch semikontinuierlich durchgeführt werden, wobei die Rolle für die Dauer der Schweißvorgänge der Schweißeinrichtungen mit der Ausgangshalbzeugbahn auf der Walze in der Drehbewegung gestoppt wird. Nach dem Schweißvorgang dreht sich die Walze weiter, bis sie zum darauffolgenden Schweißvorgang wieder anhält.

Wie beschrieben kann die Halbzeugbahn in Verfahrensschritt b) auf Stoß oder überlappend auf die Walze gewickelt werden.

In einer weiteren Ausführungsform betrifft die Erfindung eine Vorrichtung zur Durchführung des erfindungsgemäßen Verfahrens, umfassend eine Halbzeugbahn-Zuführeinrichtung und eine Walze, wobei die Halbzeugbahn-Zuführeinrichtung geeignet ist, eine Ausgangshalbzeugbahn der Walze in einem Winkel α, dessen Betrag größer als 0° und kleiner als 90° ist, zwischen der Laufrichtung der Ausgangshalbzeugbahn und der Walzenachse zuzuführen, eine Positioniervorrichtung zum überlappenden oder auf-Stoß-Positionieren der Randkanten der Ausgangshalbzeugbahn auf der Walze, eine oder mehrere Verbindungsvorrichtungen, die entlang der Randkanten der Ausgangshalbzeugbahn positioniert werden können, eine oder mehrere Schneidvorrichtungen, die eingestellt werden können, so daß sie einen Winkel β, dessen Betrag größer als 0° und kleiner als 90° ist, mit der Walzenachse einschließen, ferner eine oder mehrere Abnahmeeinrichtung(en), die geeignet sind, je mindestens eine entstehende X-Halbzeugbahn abzunehmen.

Bevorzugt umfaßt die erfindungsgemäße Vorrichtung zusätzlich eine oder mehrere Wickelwalzen zum Aufwickeln der entstehenden X-Halbzeugbahn.

Eine Halbzeugbahn hergestellt gemäß der vorliegenden Erfindung weist eine Laufrichtung in Richtung ihrer längsten Ausdehnung auf. Üblicherweise kann eine erfindungsgemäße Halbzeugbahn auf eine Rolle bzw. Walze aufgewickelt werden. wobei prinzipiell verschiedene Wickelverfahren und Wickelwinkel zur Verfügung stehen. Man spricht dann von einer Wickellage, bei einer Wickellage aus Endloslage (Endlos-Halbzeugbahn) spricht man dementsprechend von einer Endlos-Wickellage. Der Begriff "Bahn" bzw. "Halbzeugbahn" umfaßt im Sinne der vorliegenden Offenbarung auch eine Bahn "im Entstehen", die ggf nur aus wenigen Segmenten besteht.

Die Schweißnaht ist der Bereich, in dem beim Verschweißen eine Erweichung bis hin zur Verflüssigung des thermoplastischen Materials (des Polymeren) eintritt.

Unter dem Fasergewichtsanteil wird dabei der relative Anteil der Fasern am Gesamtgewicht des Matrix (Polymere plus gegebenenfalls Additive) und Verstärkungsfasern enthaltenden Halbzeugs verstanden.

Mit dem erfindungsgemäßen Verfahren können die erfindungsgemäßen Halbzeugbahnen vorteilhaft und ökonomisch hergestellt werden.

Das erfindungsgemäße Verfahren kann ohne Schweißfaden und ohne zusätzlich als Schweißhilfe eingelegte Folien oder Tapes auskommen, insbesondere wenn die Ausgangshalbzeugbahn überlappend auf der Walze positioniert wird. Dies vereinfacht das Verfahren beträchtlich, vermeidet zeitintensive Fadenführung bzw. Folienplazierung und gewährleistet ein Höchstmaß an Materialuniformität und Berechenbarkeit der anisotropen Eigenschaften der erhaltenen X°-Tape-Halbzeugbahn.

Die Überlappung, gemessen in Laufrichtung des entstehenden erfindungsgemäßen Halbzeugs entspricht bevorzugt der Breite der Schweißnaht, kann jedoch auch geringer sein.

Besonders bevorzugt ist erfindungsgemäß, wenn die in der Matrix aus thermoplastischem Kunststoff eingebetteten Endlosfasern vollständig oder nahezu vollständig von thermoplastischem Kunststoff umhüllt sind. Insbesondere ist bevorzugt, daß die Ausgangshalbzeugbahn keinen Randbereich mit verringerter Faserdichte aufweist.

Durch eine überlappende Positionierung der Ausgangshalbzeugbahnen wird grundsätzlich eine Verdickung der Halbzeugbahnen im Bereich der Schweißnaht in Kauf genommen. Dies muss jedoch kein Nachteil sein, da sich die Verdickungen im weiteren Verfahren nicht negativ bemerkbar machen. Erfindungsgemäß kann sich jedoch auch bevorzugt ein Schritt einer Druckbehandlung ("Verplättung" oder Glättung) der Schweißnaht anschließen. Hier sind die Dickenverhältnisse im Sinne der Erfindung prinzipiell beliebig vorteilhaft einstellbar. Beispielsweise kann die Dicke so eingestellt werden, daß überhaupt keine Verdickung im Bereich der Schweißnaht mehr auftritt, die Dicke des Bahnkörpers im Bereich der Schweißnaht also der sonstigen Dicke des Bahnkörpers entspricht. Eine Verdickung im Bereich der Schweißnaht wie sie erfindungsgemäß auftreten kann, ist im allgemeinen unschädlich.

Bevorzugt umfaßt das erfindungsgemäße Verfahren einen zusätzlichen Schritt des Aufwickelns der Halbzeugbahn. Nach dem beschriebenen Verfahren kann erfindungsgemäß eine Endloswickellage erhalten werden. Wenn das Verfahren wie beschrieben einen Schritt des Aufwickelns der Halbzeugbahn enthält, kann eine erfindungsgemäße Endloswickellage auf Rolle erhalten werden, die ohne weitere Modifizierungen kommerzialisiert werden kann und ihren Verwendungen zugeführt werden kann, in denen sich die Vorteile der Verfügbarkeit von kostengünstig und schnell hergestellten X°-Tapes als Endloswickellagen mit praktisch jedem gewünschten Winkelbetrag X nutzen lassen.

Die erfindungsgemäß erhaltenen Halbzeugbahnen bzw. die erfindungsgemäß erhaltenen Endloswickellagen können beispielsweise zur Herstellung eines Mehrschichtverbundwerkstoffs bzw. eines Organoblechs verwendet werden, insbesondere eines Mehrschichtverbundwerkstoffs bzw. Organoblechs, umfassend mindestens zwei Schichten mit voneinander unterschiedlichen Faserausrichtungen.

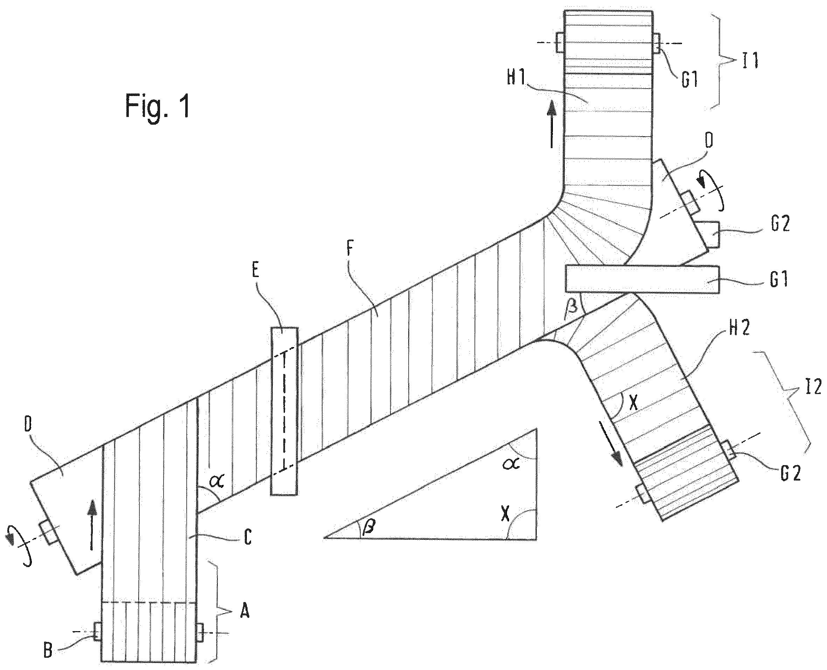

Beispiel:
Das erfindungsgemäße Verfahren kann beispielsweise auf einer Vorrichtung wie in Fig. 1 schematisch dargestellt ausgeführt werden.

Die Vorrichtung umfassend eine Halbzeugbahn-Zuführeinrichtung A, von der nur die Rolle B dargestellt ist, von der die Ausgangshalbzeugbahn C zugeführt wird. Die Ausgangshalbzeugbahn, ein 0°-Band, wird auf die Walze D in einer Weise aufgewickelt, dass zwischen der Laufrichtung der Ausgangshalbzeugbahn C und der Walzenachse ein Winkel a aufgespannt wird. Der Betrag dieses Winkels α ist erfindungsgemäß größer als 0° und kleiner als 90°, in Fig. 1 etwa 50°. Eine Positioniervorrichtung (nicht gezeigt) überwacht und steuert die überlappende Positionierung der Ausgangshalbzeugbahn auf der sich drehenden Walze oder die Positionierung auf Stoß. In Fig. 1 wird eine Verbindungsvorrichtung E gezeigt, die beispielsweise eine Ultraschallschweißvorrichtu
ng sein kann und zum Verbinden der Randkanten der auf die Walze gewickelten Ausgangshalbzeugbahn zu einer Halbzeugröhre F dient. Die Verbindunsgeinrichtung E kann dabei der Walzenrundung angepaßt sein. Auch kann die Verbindungseinrichtung E entweder (quasi)stationär sein oder beweglich positionierbar (nicht gezeigt). Im (quasi)stationären Fall wird die Verbindungseinrichtung E die Verbindung der Randkanten der gewickelten Ausgangshalbzeugbahn vornehmen, während die Drehung der Walze kurzzeitig für die Verbindung gestoppt ist. Auf diese Weise wird das Verfahren semikontiuierlich geführt. Wenn die Verbindungseinrichtung E beweglich positioniert werden kann, kann sie für die Zeit der Verbindung der Drehung der Walze nachgeführt werden und anschließend wieder zurück auf unverbundene Randkanten der gewickelten Ausgangshalbzeugbahn positioniert werden (nicht gezeigt). Beispielsweise kann so das Verfahren kontinuierlich bei sich unterbrechungslos drehender Walze D durchgeführt werden. Fig. 1 zeigt lediglich eine Verbindungsvorrichtung E. Erfindungsgemäß kann das Verfahren jedoch ebenso und vorteilhaft unter Verwendung von zwei oder mehreren Verbindungseinrichtungen E durchgeführt werden. Die auf der - sich drehenden - Walze D gewickelte Halbzeugröhre F wird in Fig. 1 zwei stationären Schneidvorrichtungen G1 (oben, sichtbar) und G2 (unten, teilweise verdeckt) zugeführt, die erfindungsgemäß in einem Winkel β zur Walzenachse, dessen Betrag größer als 0° und kleiner als 90° ist, eingestellt werden können. In Fig. 2 beträgt dieser Winkel β etwa 40°. Durch den Schneidvorgang wird eine, in Fig. 1 werden zwei X°-Halbzeugbahnen erzeugt, die von der sich drehenden Walze D abgenommen und auf Rollen G oder Wickelkerne aufgewickelt werden können. In Fig. 1 werden zwei 90°-Halbzeugbahnen H1 und H2 erzeugt, die in zwei Abnahmeeinrichtungen (I1 und I2), von denen in Fig. 1 jeweils nur die Aufnahmerollen G1 und G2 gezeigt werden, abgenommen und aufgewickelt werden können. Das Aufwickeln kann dabei spiralförmig oder - wie in Fig. 1 - gerade erfolgen.

Bevorzugt erfolgt die Verbindung der überlappend positionierten Segmente mittels Ultraschallschweißtechnik. Die Ultraschallschweißtechnik ist dem Fachmann im Prinzip bekannt. Beim Ultraschallschweißen, einem Reibschweißverfahren, wird die Erweichung des thermoplastischen Materials durch hochfrequente mechanische Schwingungen zwischen 15 und 70 kHz meist 20 bis 35 kHz erzielt, die über Molekular- und Grenzflächenreibung zur Erwärmung direkt im Schweißbereich führt. Apparative Details der Ultraschweißtechnik können bspw. der WO 2017/220327 A1 entnommen werden. Während bei einem konventionellen Thermoschweißen 10-12 Schweißtakte pro Minute erzielt werden, sind dies beim Ultraschallschweißen ein Vielfaches, beispielsweise etwa 45 Schweißtakte pro Minute.

## Patentansprüche

1. Verfahren zur Herstellung einer mit unidirektional ausgerichteten Verstärkungsfasern verstärkten Halbzeugbahn, die die Verstärkungsfasern eingebettet in eine Matrix enthält, wobei die Matrix eines oder mehrere thermoplastische Polymere enthält und wobei die unidirektional ausgerichteten Verstärkungsfasern einen vorbestimmten Winkel X mit der Laufrichtung einschließen, dessen Betrag X im Bereich von größer 0° bis 90° liegt, wobei das Verfahren die folgenden Schritte umfaßt:
a) Zuführen einer mit unidirektional in Ausgangshalbzeugbahn-Laufrichtung ausgerichteten Verstärkungsfasern verstärkten Ausgangshalbzeugbahn, die die Verstärkungsfasern eingebettet in eine Matrix enthält, wobei die Matrix eines oder mehrere thermoplastische Polymere enthält;
b) helixförmiges Aufwickeln der Ausgangshalbzeugbahn auf einer Walze, wobei die Randkanten der Ausgangshalbzeugbahn überlappen oder auf Stoß positioniert werden und die Laufrichtung der Ausgangshalbzeugbahn mit der Drehachse der Walze einen Winkel α einschließt, dessen Betrag größer als 0° und kleiner als 90° ist;
c) Verbinden der Ausgangshalbzeugbahn entlang der überlappenden oder auf Stoß positionierten Randkanten unter Bildung einer Halbzeugröhre;
d) Schneiden der Halbzeugröhre entlang einer oder mehrerer Schneidkanten, wobei die Schneidkante(n) mit der Drehachse der Walze einen Winkel β einschließt/einschließen, dessen Betrag größer als 0° und kleiner als 90° ist, wobei gilt: α + β + X = 180°;
e) Abnehmen der entstandenen mit unidirektional ausgerichteten Verstärkungsfasern verstärkten Halbzeugbahn(en), deren Randkanten den Schneidkanten aus Verfahrensschritt d) entsprechen und deren unidirektional ausgerichtete Verstärkungsfasern den Winkel X mit der Laufrichtung einschließen.

2. Verfahren gemäß Patentanspruch 1, **dadurch gekennzeichnet, daß** die Verstärkungsfasern Endlosfasern sind.

3. Verfahren gemäß Patentanspruch 1 oder 2, **dadurch gekennzeichnet, daß** die Ausgangshalbzeugbahn einlagig ist.

4. Verfahren gemäß einem der Patentansprüche 1 bis 3, **dadurch gekennzeichnet, daß** in Verfahrensschritt c) die Verbindung durch Verschweißen der Halbzeugbahn, insbesondere durch Ultraschallschweißen erfolgt.

5. Verfahren gemäß einem der Patentansprüche 1 bis 4, **dadurch gekennzeichnet, daß** sich an Verfahrensschritt e) anschließt:
f) Aufwickeln der Halbzeugbahn(en) aus Verfahrensschritt e).

6. Verfahren gemäß einem der Patentansprüche 1 bis 5, **dadurch gekennzeichnet, daß** der Fasergewichtsanteil der Ausgangshalbzeugbahn 50 bis 90 % beträgt.

7. Verfahren gemäß einem der Patentansprüche 1 bis 6, **dadurch gekennzeichnet, daß** die Verstärkungsfasern der Ausgangshalbzeugbahn ausgewählt sind aus Glasfasern, Polymerfaser, Carbonfasern, mineralische Fasern, anorganische Synthesefasern umfassen, bevorzugt Glasfasern.

8. Verfahren gemäß einem der Patentansprüche 1 bis 7, **dadurch gekennzeichnet, daß** die Matrix mindestens 60 Gew.-% aus einem oder mehreren thermoplastischen Polymeren ausgewählt aus der Gruppe, bestehend aus Polyolefin, Polyamid (PA), Polyetheretherketon (PEEK), Polyphenylensulfon, Polyphenylensulfid (PPS), Polysulfon (PSU), Polyetherimid (PEI), Polytetrafluorethylen (PTFE), Thermoplastisches Polyurethan (TPU), Polyethylenterephthalat (PET), Polyarylat und Kombinationen davon, enthält.

9. Verfahren gemäß einem der Patentansprüche 1 bis 8, **dadurch gekennzeichnet, daß** das Verfahren kontinuierlich durchgeführt wird.

10. Verfahren gemäß einem der Patentansprüche 1 bis 9, **dadurch gekennzeichnet, daß** die Halbzeugbahn in Verfahrensschritt b) überlappend auf die Walze gewickelt wird, wobei die Überlappung 0,3 bis 8 mm, insbesondere 0,5 bis 3 mm beträgt.

11. Verfahren gemäß einem der Patentansprüche 1 bis 10, **dadurch gekennzeichnet, daß** die Verstärkungsfasern Endlosfasern sind.

12. Vorrichtung zur Durchführung des Verfahrens gemäß einem der Patentansprüche 1 bis 11, umfassend eine Halbzeugbahn-Zuführeinrichtung und eine Walze, wobei die Halbzeugbahn-Zuführeinrichtung geeignet ist, eine Ausgangshalbzeugbahn der Walze in einem Winkel α, dessen Betrag größer als 0° und kleiner als 90° ist, zwischen der Laufrichtung der Ausgangshalbzeugbahn und der Walzenachse zuzuführen, eine Positioniervorrichtung zum überlappenden oder auf-Stoß-Positionieren der Randkanten der Ausgangshalbzeugbahn auf der Walze, eine oder mehrere Verbindungsvorrichtungen, die entlang der Randkanten der Ausgangshalbzeugbahn positioniert werden können, eine oder mehrere Schneidvorrichtungen, die eingestellt werden können, so daß sie einen Winkel β, dessen Betrag größer als 0° und kleiner als 90° ist, mit der Walzenachse einschließen, ferner eine oder mehrere Abnahmeeinrichtung(en), die geeignet sind, je mindestens eine entstehende X-Halbzeugbahn abzunehmen.

13. Vorrichtung gemäß Patentanspruch 12, **dadurch gekennzeichnet, daß** sie zusätzlich eine oder mehrere Wickelwalzen zum Aufwickeln der entstehenden γ-Halbzeugbahn umfaßt.

14. Vorrichtung gemäß Patentanspruch 12 oder 13, **dadurch gekennzeichnet, daß** die Verbindungsvorrichtung(en) eine oder mehrere Ultraschallschweißvorrichtung(en) oder Thermoschweissvorrichtungen sind.
